(19) Europäisches Patentamt / European Patent Office / Office européen des brevets

(11) **EP 3 923 199 B1**

(12) **EUROPEAN PATENT SPECIFICATION**

(45) Date of publication and mention
of the grant of the patent:
**25.06.2025   Bulletin 2025/26**

(21) Application number: **20179099.5**

(22) Date of filing: **09.06.2020**

(51) International Patent Classification (IPC):
**G06N 3/042** *(2023.01)*      **G06N 3/0464** *(2023.01)*
**G06N 3/0495** *(2023.01)*      **G06N 3/082** *(2023.01)*
**G06N 3/096** *(2023.01)*

(52) Cooperative Patent Classification (CPC):
**G06N 3/082; G06N 3/042; G06N 3/0464;**
**G06N 3/0495;** G06N 3/096

(54) **METHOD AND SYSTEM FOR COMPRESSING A NEURAL NETWORK**

VERFAHREN UND SYSTEM ZUR KOMPRIMIERUNG EINES NEURONALEN NETZES

PROCÉDÉ ET SYSTÈME DE COMPRESSION D'UN RÉSEAU NEURONAL

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(43) Date of publication of application:
**15.12.2021   Bulletin 2021/50**

(73) Proprietors:
• **TOYOTA JIDOSHA KABUSHIKI KAISHA**
  **TOYOTA-SHI, AICHI-KEN 471-8571 (JP)**
• **ETH Zurich - The Swiss Federal Institute of**
  **Technology Zurich**
  **8092 Zurich (CH)**

(72) Inventors:
• **ABBELOOS, Wim**
  **1140 Brussels (BE)**
• **OBUKHOV, Anton**
  **8092 Zurich (CH)**
• **RAKHUBA, Maksim**
  **8092 Zurich (CH)**
• **GEORGOULIS, Stamatios**
  **8092 Zurich (CH)**
• **KANAKIS, Menelaos**
  **8092 Zurich (CH)**

• **DAI, Dengxin**
  **8092 Zurich (CH)**
• **VAN GOOL, Luc**
  **8092 Zurich (CH)**

(74) Representative: **Cabinet Beau de Loménie**
  **103, rue de Grenelle**
  **75340 Paris Cedex 07 (FR)**

(56) References cited:
• **ALEXANDER NOVIKOV ET AL: "Tensorizing Neural Networks", 22 September 2015 (2015-09-22), XP055415964, Retrieved from the Internet <URL:https://arxiv.org/pdf/1509.06569. pdf>**
• **AGGARWAL VANEET ET AL: "Wide Compression: Tensor Ring Nets", 2018 IEEE/CVF CONFERENCE ON COMPUTER VISION AND PATTERN RECOGNITION, IEEE, 18 June 2018 (2018-06-18), pages 9329 - 9338, XP033473859, DOI: 10.1109/CVPR.2018.00972**
• **LI YAWEI ET AL: "Learning Filter Basis for Convolutional Neural Network Compression", 2019 IEEE/CVF INTERNATIONAL CONFERENCE ON COMPUTER VISION (ICCV), IEEE, 27 October 2019 (2019-10-27), pages 5622 - 5631, XP033723354, DOI: 10.1109/ICCV.2019.00572**

# EP 3 923 199 B1

**Description**

<u>Field of the invention</u>

The present invention relates to the general field of data processing using neural networks. It relates more particularly to a method for classification of digital images. The invention finds a particularly advantageous, although not limiting, application in the case of an autonomous or semi-autonomous car.

<u>Description of the Related Art</u>

Neural networks have now become one of the most widely used approach in various fields of research to enable new technological developments, including computer vision, medical image analysis, natural language processing, etc.

This tremendous success is largely due to a combination of various factors, including ever deeper networks, ever larger data sets used for training, and ever more powerful computing resources (processing units) to manage such an amount of data. In this way, neural networks have gradually turned into deep networks that contain millions of trainable parameters and consume lots of memory.

For example, the ResNet-101 model (see reference [1]) has 44 million parameters and requires 171 MB of storage. As another example, even more resource consuming, the VGG-16 model (see reference [2]) has 138 million parameters and requires 528 MB of storage.

Thus, on the one hand, the ever-increasing size of neural networks implies the search for ever more advanced techniques to improve the performance of data processing managed by these neural networks. On the other hand, over the last few years, it has been witnessing a steady transition of this technology to industry. Consequently, it is becoming a pressing problem to deploy the best-performing deep networks to all kinds of resource constrained devices/systems, such as mobile robots, smartphones, wearables and IoT (acronym for "Internet of Things") devices/systems. Indeed, these devices/systems come with restrictions in terms of runtimes, latency, energy and memory consumption, which is in contrast with the considerations that the aforementioned approaches were designed with.

For this reason, a number of research projects are currently focusing on the possibilities of reducing the size of the neural networks to be used, while limiting the loss of performance that could be associated with such a reduction in size. It should be noted that these research projects are primarily aimed at reducing the size of a neural network that is initially large. Indeed, it was found that the parameters learned by training neural networks, in particular convolutional neural networks, were largely redundant, so that it is preferable and more efficient to train a large network and prune it, rather than directly train a smaller network.

Motivated by these observations, network compression has been proposed in the literature to arrive at smaller, faster, and more energy efficient neural networks. In general, network compression techniques can be grouped into the following conventional categories: pruning, hashing, quantization. More recent categories are filter/tensor decompositions which are based on a principle of low rank representation of the tensors respectively associated to the layers forming a neural network.

In particular, it has been proposed a Tensor Ring decomposition (see reference [3]) which offers great generalization capabilities when training compressed neural network. However, a common drawback of existing Tensor Ring approaches on network compression, like the one proposed for wide compression (see reference [4]), is that that they limit the "compression ratio - performance degradation" trade-off by having independently-compressed layer representations, they still require the implementation of high rank decompositions. Such a drawback results from the estimation of individual Tensor Ring factorizations for the tensors associated with the layers, implying an implementation that is complex and therefore costly in terms of computing resources.

Filter decompositions, as for them, refer to the operations of finding a low-rank (compressed) representation, which gives the smallest error of reconstructing an uncompressed representation. This class of algorithms always requires fine-tuning, and is overall very limited by the architecture.

<u>Summary of the disclosure</u>

The purpose of the present invention is to overcome all or some of the limitations of the prior art solutions, particularly those outlined here above, by providing a solution that enables to compress a neural network in a more efficient way than the solutions of the prior art.

To this end, and according to a first aspect, a method according to the invention for image classification of digital images is recited in appended claim 1.

The image classification method according to the invention therefore proposes to parametrize each core of each of the weight tensors in said vector space, after having judiciously embedded and reshaped the weight tensor in accordance with the hyperparameters.

By "parameterization", one refers here to code instructions defining the way in which said cores are implemented in a software manner at the level of a data processing system configured to carry out said image classification method, and thus a fortiori the compressed neural network resulting from such parameterization. Therefore, such a parameterization can also be seen as a computer-implemented representation defining how each core decomposes (e.g. composes) according to the tensors of the basis.

Proceeding in this way is particularly advantageous because it enables to use only one same tensor basis to express all the weight tensors of the neural network, regardless of the size of these weight tensors. In other words, the invention enables to represent a set of tensors of arbitrary shapes, all basis tensors participating in the formation of each tensor from the layers of the neural network.

Consequently, the image classification method according to the invention is much more efficient than the solutions of the prior art, in particular because the inventors have shown that if D designates the number of coefficients (e.g. parameters) in a layer of the neural network, only $O(\log_N(D))$ coefficients need to be stored to represent such tensor through given basis tensors ("O" referring to the "Big O" Bachmann-Landau notation).

In comparison, the solutions of the prior art only allow to store at least $O(D)$ coefficients, which is higher than what the invention allows. In other words, the invention enables to compress a neural network much more efficiently.

Furthermore, using only one basis for all tensors of all layers offers the advantageous possibility to use this basis (but also coefficients of linear combinations) to compress one or more other neural networks. Thus, the tensor basis and the coefficients of the linear combinations generated form a tool that can be used to compress other neural networks efficiently and very quickly.

Finally, an additional advantage of the invention is to enable efficient computation of a product of a linear operator (such as convolutional layer or linear layer) and on operand, without the need to convert the representation (such as for example Tensor Ring representation) into full tensor representation. Instead, the product can be computed in the vector space to which the basis tensors belong.

In particular embodiments, the image classification method may furthermore include one or more of the following features, taken alone or in any technically feasible combination.

According to an embodiment, for each weight tensor, the sequence associated with the reshaped envelope tensor also comprises, before each core, a diagonal matrix intended to be multiplied with said core following it in said sequence, the size of a diagonal matrix being defined as a function of the rank hyperparameter R', said diagonal matrix being also initialized during the initialization step and being also considered as a learnable parameter during the training of the compressed neural network.

Said diagonal matrices enables to promote extra variability in the space of tensor ring decompositions. Indeed, by introducing such diagonal matrices in the sequence of elements, extra trainable parameters are introduced between each pair of cores. Proceeding in this way increases the number of parameters to represent each layer, but enables advantageously to use a smaller basis.

According to an embodiment, the basis tensors satisfy at least one constraint parameterized by the number of independent parameters defining each of said tensors.

Such features enable to represent any kind of Tensor Network decomposition, with only the Tensor Ring decomposition falling within the scope of the claims.

According to a second aspect, the invention also relates to a computer program including instructions for executing the image classification method according to the invention.

This program can use any programming language and take the form of source code, object code or a code intermediate between source code and object code, such as a partially compiled form, or any other desirable form.

According to a third aspect, the invention also relates to a computer-readable information medium containing instructions of a computer program as described above.

The information medium can be any entity or device capable of storing the program. For example, the medium can include storage means such as a ROM, for example a CD ROM or a microelectronic circuit ROM, or magnetic storage means, for example a diskette (floppy disk) or a hard disk.

Alternatively, the information medium can be an integrated circuit in which the program is incorporated, the circuit being adapted to execute the method in question or to be used in its execution.

According to a fourth aspect, the invention also relates to a data processing system for image classification of digital images, the data processing system comprising means configured to perform an image classification method according to the invention.

Brief description of the drawings

How the present disclosure may be put into effect will now be described by way of example with reference to the appended drawings, in which:

- figure 1 illustrates, in its environment, a particular embodiment of a data processing system configured to compress a given neural network and classify digital images using said compressed neural network,
- figure 2 illustrates an example of the hardware architecture of said data processing system,
- figure 3 is a flowchart of an embodiment of a first phase of a data processing method according to the invention,
- figure 4 is a flowchart of an embodiment of a second phase of the data processing method according to the invention,
- figure 5 is a graph illustrating performance results obtained by neural networks compressed according to the invention.

Description of the embodiments

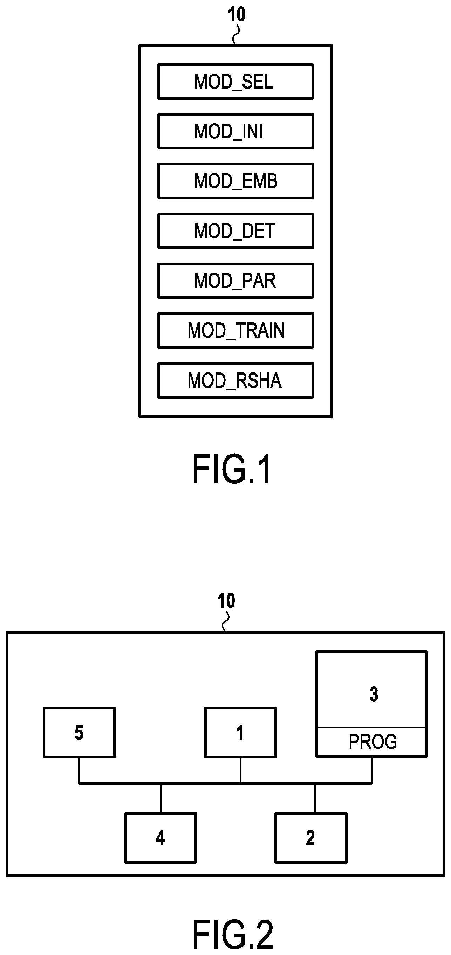

Figure 1 illustrates, in its environment, a particular embodiment of a data processing system 10 configured to compress a given neural network.

In a conventional way, the neural network has a structure in the form of a stack of layers. More precisely, said neural network comprises a plurality of layers, including in particular at least one convolution layer and/or one linear layer.

Each of these layers can be represented by means of an operator which associates a tensor X defined as an input data channel with a tensor Y defined as an output data channel, by means of the following equation:

$$Y = W\,X + V,$$

where W represents a weight tensor and V represents a bias vector.

In other words, each layer of the neural network comprises, inter alia, a weight tensor.

For the rest of the description, it is considered in a non-limiting way that the neural network is a convolutional neural network comprising L layers, L being a natural number strictly greater than 1. Moreover, one adopts the notation according to which a weight tensor of layer I, I being between 1 and L, is referred to as $W\_I$. In a similar manner, input data channel and output data channel for said layer I are respectively referred to as $X\_I$ and $Y\_I$.

However, it should be noted that the invention remains applicable whatever the nature of the neural network considered, in particular for any deep neural network, even though such networks do not fall within the scope of the claims, which are limited to convolutional neural networks.

Although the invention only relates to image classification of digital images, as further examples not falling within the scope of the claims, it also should be noted that no limitation is attached to the kind of digital data that may be received through the input data channel of the first layer of the convolutional neural network. In the same way, no limitation is attached to the kind of score or classification that may be output based on the input.

According to the invention, the inputs to the convolutional neural network are images and the output generated by the convolutional neural network for a given image is a classification of said given image, which may be scores for each of a set of object categories, with each score representing an estimated likelihood that the image contains an image of an object belonging to the category.

According to another example, not falling within the scope of the claims, if the inputs to the convolutional neural network are Internet resources (e.g., web pages), documents, or portions of documents or features extracted from Internet resources, documents, or portions of documents, the output generated by the convolutional neural network for a given Internet resource, document, or portion of a document may be a score for each of a set of topics, with each score representing an estimated likelihood that the Internet resource, document, or document portion is about the topic.

According to another example, not falling within the scope of the claims, if the inputs to the convolutional neural network are features of an impression context for a particular advertisement, the output generated by the convolutional neural network may be a score that represents an estimated likelihood that the particular advertisement will be clicked on.

According to another example, not falling within the scope of the claims, if the inputs to the convolutional neural network are features of a personalized recommendation for a user, e.g., features characterizing the context for the recommendation, e.g., features characterizing previous actions taken by the user, the output generated by the convolutional neural network may be a score for each of a set of content items, with each score representing an estimated likelihood that the user will respond favourably to being recommended the content item.

According to another example, not falling within the scope of the claims, if the input to the convolutional neural network is text in one language, the output generated by the convolutional neural network may be a score for each of a set of pieces of text in another language, with each score representing an estimated likelihood that the piece of text in the other language is a proper translation of the input text into the other language.

According to another example, not falling within the scope of the claims, if the input to the convolutional neural network is a spoken utterance, a sequence of spoken utterances, or features derived from one of the two, the output generated by the convolutional neural network may be a score for each of a set of pieces of text, each score representing an estimated likelihood that the piece of text is the correct transcript for the utterance or sequence of utterances.

The size of a weight tensor is equal to a product of numbers referred to as "size numbers" (also called "dimensions" in the literature of the technical field of the invention). In a manner known per se, said size numbers comprise numbers whose respective size are equal to the sizes of the input and output data channels associated with the layer to which said weight tensor belongs.

For example, considering a two-dimensional convolutional layer of the convolutional neural network, the size of the input data channel of said convolutional layer is equal to:

$$Sw \times Sh \times Cin$$

where Sw, Sh, Cin refer respectively to the width, the height and the number of parameters (i.e. features) of said input data channel. The size of the output data channel of said convolutional layer is, as for it, equal to:

$$(Sw - K + 1) \times (Sh - K + 1) \times Cout$$

where K and Cout refer respectively to the filter size (i.e. the size of the filter which is used for said convolutional layer to extract features of the input data channel) and the number of parameters (i.e. features) of said output data channel. Thus, the size of the weight tensor associated to the conventional layer of said example is equal to:

$$Cout \times Cin \times K \times K.$$

$$A(i_1, \cdots, i_d) = \sum_{\substack{r_1, \cdots, r_d = 1 \\ r_{d+1} = r_1}}^{R_1, \cdots, R_d} \prod_{k=1}^{d} C_k(r_k, i_k, r_{k+1})$$

where:

$$C_k \in \mathbb{R}^{R_k \times N_k \times R_{k+1}}, r_k \in \{1, \cdots, R_k\}$$

The element $(R_1, ..., R_d)$ is conventionally referred to as the Tensor Ring rank, and corresponds to the hyperparameter R mentioned above. Moreover, each $C_k$ corresponds to said core which is a three dimensional tensor.

It should be noted that representations other than the Tensor-Ring representation may be considered, but do not fall within the scope of the claims, such as for example the Tensor-Train decomposition which actually corresponds to the case where $R_1$ is equal to 1 in the above mentioned Tensor-Ring decomposition.

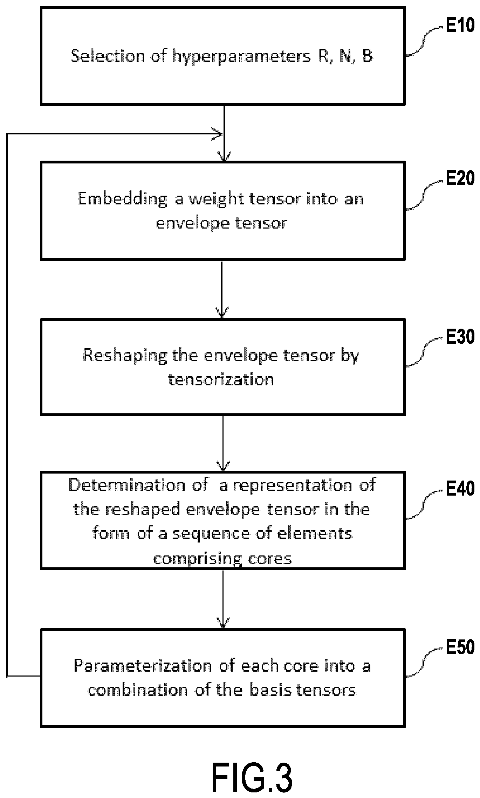

Figure 3 is a flowchart of the main steps of the compression method according to the invention, these steps being carried out by the data processing system 10.

It should be noted that, according to the invention, the hyperparameter R (respectively the hyperparameter N) associated with any one of the weight tensors of a layer I is a vector whose components are all equal to the same natural number R' (respectively the same natural number that is still denoted N' in the following). In this way, only one basis of tensors is considered for the compression method of figure 3.

Furthermore, it should also be noted that, according to the invention, the expression "representation of a tensor" refers to a Tensor Ring decomposition.

The way in which the compression method can be considered for a different representation from that of Tensor Ring, but also with hyperparameters R/N whose components are not all equal to the same natural number R'/N', is described later with reference to particular embodiments which are not covered by the present invention but which are nevertheless provided for the sake of the technical context of the invention.

As shown in Figure 3, the compression method comprises a step E10 of selecting the hyperparameter R, N and B.

This selection step E10 is performed by the selection module MOD_SEL of the data processing system 10.

- an embedding module MOD_EMB, configured to embed a weight tensor into an envelope tensor, the size of the envelope tensor being equal to a product of size numbers such that:

  • if a size number M of the weight tensor is an integer power of said number N', said size number M is a size number of the envelope tensor,

- if a size number M of the weight tensor is not an integer power of said number N', said number N' raised to a power equal to the ceiling value of log base N' of said size number M is a size number of the envelope tensor,

- a reshaping module MOD_RSHA, configured to reshape an envelope tensor by tensorization based on said number N',
- a determination module MOD_DET, configured to determine, for a reshaped envelope tensor, a representation of said reshaped envelope tensor in the form of a sequence of elements comprising tensors referred to as "cores", said cores belonging to said vector space V,
- a parameterization module MOD_PAR, configured to parameterize a core into a combination of the basis tensors.

The functionalities attached to each of the functional modules are explained in detail later on when describing modes of implementation of said compression method.

In the present embodiment, it is considered that the data processing system 10 takes the form of a single computer comprising all the functional modules mentioned above.

However, nothing excludes the possibility of considering that the data processing system 10 comprises a plurality of computers configured in a similar manner to said single computer, said functional modules being distributed between the computers of said plurality of computers (in which case, the PROG program comprises a plurality of sub-programs also distributed between said computers of said plurality of computers).

Moreover, in the present embodiment, it is also considered that the convolutional neural network (i.e. the code instructions defining said convolutional neural network) is previously stored in a memory of the data processing system 10, such as the non-volatile memory 4.

In an alternative embodiment, said convolutional neural network is initially stored in a memory equipping an entity external to the data processing system 10 (e.g.: database server). Therefore, in this alternative embodiment, the data processing system 10 also includes an obtaining module configured to obtain said convolutional neural network. In other words, said convolutional neural network (i.e. the code instructions defining said convolutional neural network) is obtained via a data exchange (transmission/reception) controlled by the obtaining module and carried out by the communication means 5 of said data processing system 10 as well as by communication means suitable for transmission equipping the external entity.

In general, such an exchange of data between the obtaining module and the said entity is carried out via a communication interface. No limitation is attached to the nature of this communication interface, which may be wired or non-wired, and may implement any protocol known to the person skilled in the art (Ethernet, Wifi, Bluetooth, 3G, 4G, 5G, etc.), the communication means 5 of the data processing system 10 being also configured accordingly.

More generally, no limitation is attached to the way in which the convolutional neural network is obtained by the data processing system 10.

The hyperparameters R, N and B are vectors each comprising natural numbers from which said at least one basis of tensors is defined according to the invention.

Some notations are now briefly introduced here in order to remind the definitions of the hyperparameters R and N, these definitions being well known to the person skilled in the art.

Let A be a d-dimensional tensor:

$$A = \mathbb{R}^{N_1 \times \cdots \times N_d}$$

Therefore, $A(i_1, i_2,...,i_d)$ represents the element of tensor A which is in the position $(i_1, i_2,..., i_d)$. Said position $(i_1, i_2,...,i_d)$ belongs to a set I:

$$I = I_1 \times \cdots \times I_2$$

where:

$$I_k = \{1, \cdots, N_k\}$$

The element $(N_1,...,N_d)$ corresponds to the dimension hyperparameter N mentioned above.

Several types of representations exist for such a tensor A. For example, such a representation is the Tensor Ring decomposition according to which:

$$A(i_1, \cdots, i_d) = \sum_{\substack{r_1, \cdots, r_d = 1 \\ r_{d+1} = r_1}}^{R_1, \cdots, R_d} \prod_{k=1}^{d} C_k(r_k, i_k, r_{k+1})$$

where:

$$C_k \in \mathbb{R}^{R_k \times N_k \times R_{k+1}} , r_k \in \{1, \cdots, R_k\}$$

The element $(R_1, ..., R_d)$ is conventionally referred to as the Tensor Ring rank, and corresponds to the hyperparameter R mentioned above. Moreover, each $C_k$ corresponds to said core which is a three dimensional tensor.

It should be noted that representations other than the Tensor-Ring representation may be considered in general, but do not find application in the invention as claimed, such as for example the Tensor-Train decomposition which actually corresponds to the case where $R_1$ is equal to 1 in the above mentioned Tensor-Ring decomposition.

Figure 3 is a flowchart of the main steps of the compression method according to the invention, these steps being carried out by the data processing system 10.

For the description of said compression method, and for the sake of simplicity, it is considered that the hyperparameter R (respectively the hyperparameter N) associated with any one of the weight tensors of a layer I is a vector whose components are all equal to the same natural number R' (respectively the same natural number that is still denoted N' in the following). In this way, only one basis of tensors is considered for the compression method of figure 3.

Furthermore, it is also considered that the expression "representation of a tensor" refers to a Tensor Ring decomposition. The way in which the compression method can be considered for a different representation from that of Tensor Ring is described later, but does not fall within the scope of the claims.

As shown in Figure 3, the compression method comprises a step E10 of selecting the hyperparameter R, N and B.

This selection step E10 is performed by the selection module MOD_SEL of the data processing system 10.

By way of example, the number R' is selected in the set {2,...,32}, the number N' is selected in the set {2, 3, 4, 9} (preferably matching the size of a spatial factor of the convolutional kernel of a convolutional layer), and the hyperparameter B is selected in the set {1,...,128}.

Obviously, nothing excludes considering, following other examples not detailed here, other sets within which the hyperparameters R, N and B are selected.

Once said hyperparameters have been selected, the compression method comprises a set S_E of steps which are iterated for each of the weight tensors W_I belonging to the convolutional neural network.

As shown in Figure 3, said set S_E of steps comprises, for a given weight tensor W_I (i.e. index I is fixed), a step E20 of embedding the weight tensor W_I into an envelope tensor ⊔⊔_I.

This embedding step E20 is performed by the embedding module MOD_EMB of the data processing system 10.

Said embedding step E20 is performed such that the size of the envelope tensor ⊔⊔_I is equal to a product of size numbers. More precisely, said size numbers are defined such that:

- if a size number M of the weight tensor W_I is an integer power of said number N', said size number M is a size number of the envelope tensor ⊔⊔_I,
- if a size number M of the weight tensor W_I is not an integer power of said number N', said number N' raised to a power equal to the ceiling value of log base N' of said size number M is a size number of the envelope tensor.

Thus, the envelope tensor ⊔⊔_I is a tensor enclosing the weight tensor W_I in the sense that the size numbers that define its dimension are greater or equal than the corresponding size numbers of the weight tensor W_I.

It should be noted that the principle of embedding a weight tensor into an envelope tensor is known to the man skilled in the art, and is mostly based on natural integer factorization techniques. By way of example, it is possible to refer to reference [5] for more details.

In order to illustrate the operation of said step E30, let's consider, according to a first example, a number N' equal to 2, as well as a weight tensor W_I of size 32x16x3x3 and belonging to a convolution layer of the convolutional neural network. Each of the numbers 32, 16, and 3 corresponds to a size number of said weight tensor W_I. Specifically, the numbers 32 and 16 correspond respectively to the number Cout of parameters of the data output channel and the number Cin of parameters of the data input channel for said convolution layer. The number 3, as for it, corresponds to the size K of the filter used for said convolution layer.

Therefore, let us first consider the size numbers 32 and 16. These numbers are integer powers of the number N' ($32=2^5$ and $16=2^4$). Therefore, according to the invention, these numbers 32 and 16 are also size numbers of the envelope tensor.

The size number 3, on the other hand, is not an integer power of the number N'. Therefore, in step E30, the following quantity is calculated:

$$\lceil log_{N'}(3) \rceil = \lceil log_2(3) \rceil = 2$$

The result of this calculation is that the number N' raised to the power 2 corresponds to a size number of the envelope tensor ⛢_I, in accordance with the number 3 of the weight tensor W_I. In the end, the envelope tensor ⛢_I associated with the weight tensor W_I has a size of 32x16x4x4.

It should be noted that the size of the envelope tensor ⛢_I is different from 32x16x4x4 if the number N' is different from 2. Indeed, let's consider, according to a second example, a number N' equal to 3 for a weight tensor W_I whose size is again equal to 32x16x3x3. The size number 32 is not an integer power of the number N'. Therefore, by performing calculations similar to those performed previously, the following quantity

$$\lceil log_{N'}(32) \rceil = \lceil log_3(32) \rceil = 4$$

is calculated in step E30. The result of this calculation is that the number N' raised to the power 4 corresponds to a size number of the envelope tensor ⛢_I, in accordance with the number 32 of the weight tensor W_I. In the end, after all the calculations are done, the envelope tensor ⛢_I associated with the weight tensor W_I has a size of 81x27x3x3.

Said set S_E of steps also comprises, for said given weight tensor W_I, a <u>step E30</u> of reshaping said envelope tensor W_I by tensorization.

This reshaping step E30 is performed by the reshaping module MOD_RSHA of the data processing system 10.

It should be noted that the principle of reshaping a tensor by tensorization is known to the man skilled in the art, and is mostly based on generating "artificial" dimensions by factorising each of the size numbers of a tensor by a given integer. By way of example, it is possible to refer to reference [6] for more details.

In the present embodiment, the aim of the reshaping according to step E30 is to factorize the size numbers of the envelope tensor ⛢_I by the number N', so as to generate said artificial dimensions.

In order to illustrate the implementation of step E30, let's consider the previous example where the weight tensor W_I has a size of 32x16x3x3, and where N' is equal to 2 so that the envelope tensor ⛢_I has a size of 32x16x4x4. Thus, at the end of step E30, a reshaped envelope tensor Ŵ_I is obtained whose size is equal to:

$$(2x2x2x2x2) \times (2x2x2x2) \times (2x2) \times (2x2)$$

In the latter expression, the first five occurrences of the number N' correspond to the decomposition of the size number 32 of the envelope tensor ⛢_I as a function of said number N', the next four occurrences of the number N' correspond to the decomposition of the size number 16 of the envelope tensor ⛢_I as a function of said number N', etc.

Said set S_E of steps also comprises, for said given weight tensor W_I, a <u>step E40</u> of determining a Tensor-Ring decomposition of the reshaped envelope tensor Ŵ_I.

This determination step E40 is performed by the determination module MOD_DET of the data processing system 10.

Said Tensor-Ring decomposition is determined in the form of a sequence of elements comprising said cores previously mentioned, said cores belonging to the vector space V generated by the basis tensors as described in more detail below. Otherwise said, the reshaped envelope tensor Ŵ_I may be written as a combination of cores referred to as $C_k^I$, the index I referring to the fact that this core is determined for the layer I of the convolutional neural network.

According to a particular embodiment, each element of said sequence is a core of the Tensor-Ring decomposition. Therefore, according to this embodiment, the reshape envelope tensor Ŵ_I may be written:

$$\widehat{W}\_l = \sum_{\substack{r_1,\cdots,r_d=1 \\ r_{d+1}=r_1}}^{R',\cdots,R'} \prod_{k=1}^{d_l} C_k^l(r_k, i_k, r_{k+1})$$

where $d_l$ is the dimension of the reshaped envelope tensor $\hat{W}\_l$, i.e. the number of occurrences of the number N' in writing the size of said reshaped envelope tensor after reshaping by tensorization.

For example, let's consider the previous example where the size of the reshaped envelope tensor $\hat{W}\_l$ is equal to:

$$(2x2x2x2x2) \text{ x } (2x2x2x2) \text{ x } (2x2) \text{ x } (2x2)$$

Thus, according to this example, the reshaped envelope tensor $\hat{W}\_l$ admits a Tensor-Ring decomposition in which thirteen (i.e. 5 + 4 + 2 + 2) cores $C_k^l$ are used, each core $C_k^l$ being a three dimensional tensor of the shape R' x 2 x R'.

In another particular embodiment, the sequence associated with the reshaped envelope tensor $\hat{W}\_l$ also comprises, before each core $C_k^l$, a diagonal matrix $\sigma_k^l$ intended to be multiplied with said core $C_k^l$ following it in said sequence. The size of the diagonal matrix $\Omega_k^l$ is defined as a function of the hyperparameter R. More precisely, considering here that the hyperparameter R is a vector whose components are all equal to the same natural number R', the diagonal matrix $\Omega_k^l$ is defined with:

$$\Omega_k^l \in \mathbb{R}^{R' \times R'}$$

Consequently, in this particular embodiment, the reshape envelope tensor $\hat{W}\_l$ may be written:

$$\widehat{W}\_l = \sum_{\substack{r_1,\cdots,r_d=1 \\ r_{d+1}=r_1}}^{R',\cdots,R'} \prod_{k=1}^{d_l} \Omega_k^l(r_k, r_k) \, C_k^l(r_k, i_k, r_{k+1})$$

where $\Omega_k^l(r_k, r_k)$ corresponds to the element of the diagonal of $\Omega_k^l$ placed in position $(r_k, r_k)$.

Said diagonal matrices enables to promote extra variability in the space of tensor ring decompositions. Indeed, by introducing such diagonal matrices in the sequence of elements, R' extra trainable parameters are introduced between each pair of cores. Proceeding in this way increases the number of parameters to represent each layer, but enables advantageously to use a smaller basis.

It should be noted that the inventors have found, following numerical simulations, that the best results in terms of accuracy for classification and segmentation are obtained when the values of the diagonal matrices are kept positive.

Said set S_E of steps also comprises, for said given weight tensor W_l, a step E50 of parameterizing each core associated to the reshaped envelope tensor $\hat{W}\_l$ into a combination of the basis tensors.

This decomposition step E50 is performed by the parameterization module MOD_PAR of the data processing system 10.

By "parameterization", one refers here to code instructions defining the way in which said cores are implemented in a software manner at the level of the data processing system 10, and thus a fortiori the compressed neural network resulting from such parameterization. Therefore, such a parameterization can also be seen as a computer-implemented representation defining how each core decomposes (e.g. composes) according to the tensors of the basis.

In other words, according to said step E50, it is imposed that all the cores $C_k^l$ belong to said vector space V generated by the basis tensors. Thus, if the basis tensors are referred as $\beta_b$ with:

$$\beta_b \in \mathbb{R}^{R' \times N' \times R'}, \quad b \in \{1, \cdots, B\}$$

said vector space V may be defined by:

$$V \overset{\text{def}}{=} \left\{ \sum_{b=1}^{B} \delta_b \beta_b \,\middle|\, \delta_b \in \mathbb{R} \right\} \subseteq \mathbb{R}^{R' \times N' \times R'}$$

As a result, according to the present embodiment, each core $C_k^l$ of the reshaped envelope tensor $\hat{W}\_l$ may be written:

$$C_k^l = \sum_{b=1}^{B} \alpha_{k,b}^l \beta_b, \quad k \in \{1, \cdots, d_l\}$$

where $\alpha_{k,b}^l$ are the coefficients of said linear combination from which the compressed neural network is parameterized.

It should be noted that the choice of having each core decompose into a sum of basis tensors is only a variant of implementation of the invention. The invention remains indeed applicable for any type of parameterization. Thus, the aforementioned sum can be replaced, for example, by a product between the different tensors of the base, or, more generally, by any logical operation between these tensors.

The set S_E of steps E20 to E50 has so far been described in relation to a single weight tensor W_l of the convolutional neural network. However, it should be noted that in accordance with the invention, said set S_E of steps E20 to E50 is iterated for each of the weight tensors contained in said convolutional neural network.

Decomposing each core of each of the weight tensors in the vector space V is particularly advantageous because it enables to use only one same tensor base to express all the weight tensors of the convolutional neural network, regardless of the size of these weight tensors. Proceeding in this way is much more efficient than the solutions of the prior art, in particular because the inventors have shown that if D designates the number of coefficients (e.g. parameters) in a layer of the convolutional neural network, only $O(\log_N(D))$ coefficients need to be stored in the case where no diagonal matrices $\Omega_k^l$ are considered, and only $O(L \times \log_N(D))$ coefficients need to be stored to represent such tensor through given basis tensors ("O" referring to the "Big O" Bachmann-Landau notation).

In comparison, the solutions of the prior art only allow to store at least $O(D)$ coefficients, which is higher than what the invention allows. In other words, the invention enables to compress a convolutional neural network much more efficiently.

The compression method has been described so far considering that the hyperparameter R/N is a vector whose components are all equal to the same natural number R'/N', so that only one basis of tensors is considered for the compression method of figure 3. However, exemplary cases not falling within the scope of the invention are further described, where several bases of tensors are considered.

As an example not falling within the scope of the claims, it is possible to consider bases of tensors to represent cores of the shape $R_1 \times N' \times R_2$, $R_2 \times N' \times R_3$, etc. This is particularly advantageous when the representation determined for the reshaped envelope tensor is a Tensor-Train decomposition.

In addition, and according to another example not falling within the scope of the claims, it is also possible to consider several bases of tensors for representing cores of the form $R' \times N_1 \times R'$, $R' \times N_2 \times R'$, etc.

More generally, both previous examples, falling outside the scope of the claims, can be combined, the compression method according to the invention thus enabling to take into consideration any core of the form $R_i \times N_j \times R_k$ where $R_i$ and $R_j$ belong to R and $N_i$ belongs to N.

The compression method has also been described so far considering that the basis tensors were three-dimensional tensors. However, an example falling outside the scope of the claims could consider one or more bases composed of four-dimensional tensors. In this way, it is possible to consider MERA (acronym of the expression "Multiscale Entanglement Renormalization Ansatz") decomposition for the weight tensors of the convolutional neural network.

Moreover, the compression method has also been described so far considering that the basis tensors are unconstrained, meaning they are represented with R x N x R parameters, these parameters being trainable. However, nothing excludes considering that the basis tensors satisfy at least one constraint parameterized by the number of independent parameters defining each of said tensors.

For example, such a constraint corresponds to the fact of imposing on the basis tensors to belong to a two dimensional Stiefel frame of size R x (N x R) or (R x N) x R. In particular, such an example of constraint is particularly suitable when the representation determined for the reshaped envelope tensor is a Tensor-Train decomposition, which would fall outside the scope of the claims requiring a Tensor-Ring decomposition.

Furthermore, it should be noted that the invention is not limited to a method for compressing a convolutional neural network. Indeed, the invention as set out in the claims also performs in a second phase, after a first phase of compressing the convolutional neural network, initializing and training said compressed network.

For the sake of simplicity, and for the rest of the description, it is considered in a non-limiting way that the system configured to initialize and to train the compressed convolutional neural network is said data processing system 10. However, nothing excludes considering that the compressed convolutional neural network is first obtained by said data processing system 10 and then transmitted to another system for initializing and training. In this case, said other system is equipped with communication means compatible with the communication means 5 equipping the data processing system 10, and comprises an obtaining module controlling said communication means to obtain said compressed neural network.

As shown in Figure 2, the functional modules defined by the program PROG of said data processing system 10 also comprise:

- an initialization module MOD_INI, configured to initialize the basis tensors and the combination from which a convolutional neural network is parameterized by means of the data processing system 10,
- a training module MOD_TRAIN, configured to train said convolutional neural network, the basis tensors and coefficients defining said combination being considered as trainable parameters during said training.

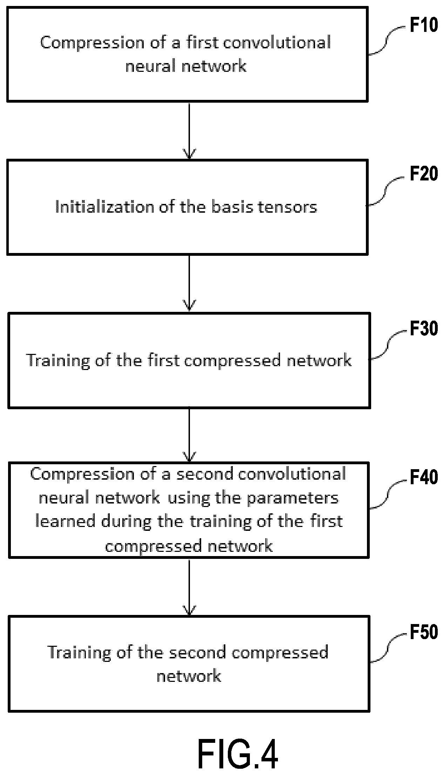

Figure 4 is a flowchart of a particular embodiment according to the invention, carried out by the data processing system 10, of the data processing method according to the invention.

As shown in Figure 4, the data processing method comprises a first step F10 of compressing a first convolutional neural network, so as to obtain a first compressed network.

This step F10 is performed by the data processing system 10 according to the compression method described above.

In order to train said first compressed network, it is of course important that the basis tensors and the combinations from which said first compressed network is parameterized (but also the diagonal matrices if any) are initialized. To this end, the data processing method also includes a step F20 dedicated to that purpose.

This initialization step F20 is performed by the initialization module MOD_INI of the data processing system 10.

It should be noted that proper coefficient initialization plays an important role in convergence rate and quality of discovered local minima when the quality of the output of a compressed neural network is evaluated against output obtained without compression.

Thus, according to a particular embodiment, the initialization step F20 is performed following the practices described in reference [7]. General principle of these practices is described here. They consist in initializing each coefficient of a reshaped weight tensor $\hat{W}\_l$ by sampling it as an i.i.d. (acronym of the expression "independent and identically distributed") random variable from a normal distribution $\mathbb{N}(0,\sigma_W^2)$, where $\sigma_W^2$ is determined from the shape of the weight tensor. As previously described, the reshaped weight tensor $\hat{W}\_l$ is represented with internal coefficients $\alpha_{k,b}^l$ and basis tensors $\beta_b$ shared between all layers (and also $\Omega_k^l$, if applicable). Let's assume first that the coefficients $\alpha_{k,b}^l$ and the basis tensors $\beta_b$ are i.i.d. random variables sampled from normal distribution $N(0,\sigma_B^2)$ and $N(0,\sigma_\alpha^2)$ respectively, and that the diagonal matrices $\Omega_k^l$ are not taken into account. Therefore, variance of each core $C_k^l$ is given as follows:

$$Var\left(C_k^l\right) = Var\left(\sum_{b=1}^{B} \alpha_{k,b}^l \, \beta_b\right) = B \times \sigma_B^2 \times \sigma_\alpha^2$$

and consequently:

$$Var\big(\hat{W}\_l\,(i_1,\cdots,i_{d_l})\big)$$

$$= Var\left( \sum_{\substack{r_1,\cdots,r_d=1 \\ r_{d+1}=r_1}}^{R',\cdots,R'} \prod_{k=1}^{d_l} C_k^l(r_k,i_k,r_{k+1}) \right)$$

$$= (R' \times B \times \sigma_B^2 \times \sigma_\alpha^2)^{d_l} = \sigma_W^2$$

According the equations given here above, it can be noted that the variance of basis tensors is tied up with variances of coefficients matrices elements across all layers. Thus, $\sigma_B$ is chosen so as to be a function of B and R', the rest of the variance being supported by $\sigma_\alpha$. More precisely, $\sigma_B$ and $\sigma_\alpha$ are chosen as follows:

$$\sigma_B^2 = (BR')^{-1}, \quad \sigma_\alpha^2 = (\sigma_W)^{2/d_l}$$

internal coefficients $\alpha_{k,b}^l$ and basis tensors $\beta_b$ being initialized according to these choices.

When the diagonal matrices $\Omega_k^l$ are taken into account in the determination of the reshaped envelope tensor $\hat{W}\_l$ (see step E40 above), said diagonal matrices $\Omega_k^l$ may be initialized with identity matrices.

It should be noted that no limitation is attached to the way in which basic tensors, coefficients defining the combinations involving the cores, and, where applicable, diagonal matrices, are initialized. Any method known to the person skilled in the art can therefore be implemented, so that this point is not discussed further here.

Once the first convolutional neural network has been compressed and initialized, the data processing method comprises a step F30 of training said first compressed network, the basis tensors and the coefficients defining said combinations being considered as trainable parameters during said training.

In a still more particular embodiment, when a compression step F10 is carried out such that diagonal matrices are used in the sequence associated with a reshaped envelope tensor of said first convolutional neural network, said diagonal matrices are also considered as learnable parameters during the training of this convolutional neural network.

This training step F20 is performed by the training module MOD_TRAIN of the data processing system 10.

According to said particular embodiment, the data processing method comprises also a step F40 of compressing a second convolutional neural network, so as to obtain a second compressed network.

This step F40 is performed by the data processing system 10 according to the compression method described above. Moreover, the compression of said second convolutional neural network is implemented using at least the basis tensors learned during the training of the first compressed network.

Thus, the tensor basis generated at the end of the training of the first compressed network are transferred to said second convolutional neural network so that it is compressed using these parameters. In other words, the basis generated for the first compressed neural network serves as a support for the compression of said second convolutional neural network. This way of proceeding is very advantageous because it enables to limit the operating cost in terms of calculation.

It should be noted that the coefficients defining the combinations used to compress the first neural network, as well as the diagonal matrices, may also be transferred between the first and second compressed networks. However, it is understood that these provisions can only be implemented if the first and second networks have very similar structures.

Once the second convolutional neural network has been compressed, the data processing method comprises a step F50 of training said second compressed network, at least coefficients defining the combinations from which said second compressed network is parameterized being considered as trainable parameters during the training of the second compressed network.

According to a first example, only the coefficients of said combinations are considered as trainable parameters during the training of the second compressed network.

According to a second example, not only the coefficients of said combinations but also the basis tensors learned during the training of the first convolutional neural network are considered as trainable parameters during the training of the second compressed network.

In combination with said first and second examples, it may also be considered that when a compression step F40 is carried out such that diagonal matrices are used in the sequence associated with a reshaped envelope tensor of said second convolutional neural network, said diagonal matrices are also considered as learnable parameters during the training of this convolutional neural network.

It should be noted that re-training the basis tensors obtained from training the first compressed network, in addition to the coefficients of the combinations also obtained from training the first compressed network (and also the diagonal matrices, if any), increases the final accuracy of the second compressed network for inference.

Finally, it should also be noted that the data processing process is not limited to the compression of a single second neural network.

The data processing method has been described so far considering that only one second convolutional neural network was compressed during step F40 and then trained during step F50. However, the invention remains of course applicable independently of the number of others convolutional neural networks compressed during step F40 using the basis tensors and the coefficients of the combinations learned during the training of the first compressed network, and also trained during step F50 such that at least the coefficients of said combinations learned during the training of the first compressed network are considered as trainable parameters during the training of another compressed network.

However, the invention also enables to compress and train multiple networks of convolutional neural networks isolated from each other and sharing the same base and the same coefficients trained from a first network of convolutional neurons. By "convolutional neural networks isolated from each other", one refers here to networks assigned to distinct tasks. Therefore, in the case where one of the networks associated with one of these tasks needs to be re-trained, only the coefficients of the combinations (and possibly the basis tensors and diagonal matrices) of this network can be concerned by the re-training. Proceeding in this way allows advantageously not to modify the performances of the networks associated with the other tasks (i.e. one avoids the disadvantage of a negative transfer in the multitask setting).

However, it is also possible to re-train all said other convolutional neural networks at the same time by means of an adapted protocol.

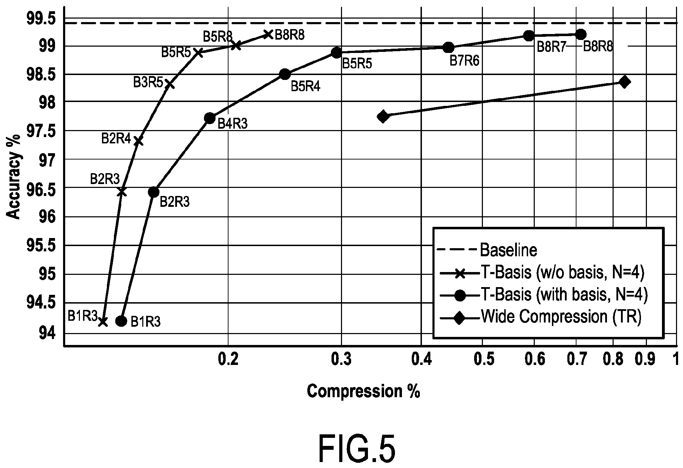

Figure 5 is a graph illustrating performance results obtained by convolutional neural networks compressed according to the invention.

Said performance refers to the Top-1 accuracy (ordinate of the graph in Figure 5) for classification experiments with LeNet5 neural network (see reference [9]) and with MNIST dataset. Classification experiments have been implemented in PyTorch and configured to fit entirely into one GPU with 12 GB.

Model compression is evaluated with the ratio of the number of independent parameters of a compressed neural network (said independent parameters comprise uncompressed parameters which are, for this example, those of the biases and BacthNorm layers as well as those of the very first convolutional layer due to its small size) to the number of independent parameters of the corresponding uncompressed neural network (line with circles annotated with base size B and rank R, and computed with N = 4).

Model compression is also evaluated with the ratio of the number of independent parameters of a compressed neural network without taking into account the basis tensors, to the number of independent parameters of the corresponding uncompressed neural network (line with crosses annotated with base size B and rank R, and computed with N = 4). This value gives an idea of the base-coefficients allocation trade-off and provides an estimate of the number of added parameters in a multitask environment with a shared basis.

In all the experiments, incompressible parameters are trained with the same optimizer settings as prescribed by the baseline training protocol. All other parameters are trained using Adam optimizer in classification tasks with a learning rate equal to 0,003 (see reference [8]). In all experiments, linear LR warm-up for 2000 steps and gradient clipping with L2 norm at 5.0 are performed.

Moreover, the training protocol followed for the experiments of Figure 5 is described in details the reference [4]: 20 epochs, batch size 128, network architecture with two convolutional layers with 20 and 50 output channels respectively, and two linear layers with 320 and 10 output channels, a total of 429K in uncompressed parameters.

As shown in Figure 5, the performance results obtained by the invention, whether or not taking into account the basis tensors for evaluating the compression ratio, surpass the performance results obtained by wide compression method (line with squares).

References:

[1] "Deep residual learning for image recognition", He K., Zhang X., Ren S., Sun J., Proceedings of the IEEE conference on computer vision and pattern recognition, pp. 770-778, 2016.

[2] "Very deep convolutional networks for large-scale image recognition", Simonyan K., Zisserman A., International Conference on Learning Representations, 2015.

[3] "Tensor ring decomposition", Zhao Q., Zhou G., Xie S., Zhang L., Cichocki A., arXiv: 1606.05535, 2016.

[4] "Wide compression: Tensor ring nets", Wang W., Sun Y., Eriksson B., Aggarwal V., Proceedings of the IEEE conference on computer vision and pattern recognition, pp. 9329-9338, 2018.

[5] "Learning Filter Basis for Convolutional Neural Network Compression", Li Y., Gu S., Gool L. V., & Timofte R., Proceedings of the IEEE International Conference on Computer Vision, pp. 5623-5632, 2019.

[6] "Tensorizing Neural Networks", Novikov A., Podoprikhin D., Osokin A., Vetrov D., Advances in Neural Information Processing Systems, pp. 442-450, 2015.

[7] "Delving deep into rectifiers: Surpassing human-level performance on imagenet classification", He K., Zhang X., Ren S., Sun J., IEEE international conference on computer vision, pp. 1026-1034, 2015.

[8] "Adam: A method for stochastic optimization", Kingma D., Ba J., Arxiv: 1412.6980, 2015.

[9] "Gradient-based learning applied to document recognition", Lecun Y., Bottou L., Bengio Y., Haffner P., Proceedings of the IEEE, 86(11):2278:2324, 1998.

## Claims

1. A computer-implemented method for image classification of digital images, said method comprising a first phase of compressing a convolutional neural network comprising a plurality of layers, each layer comprising a weight tensor whose shape is a vector with components referred to as "size numbers", said first phase being performed using a rank hyperparameter R' and a size hyperparameter B representative of a number of basis tensors, each basis tensor being an array belonging to a vector space whose dimension is equal to R' x N' x R', where N' is a number equal to or larger than 2, said first phase comprising, for each weight tensor, a set of steps of:

   - embedding (E20) the weight tensor into an envelope tensor, the size of the envelope tensor being equal to a product of size numbers such that:

      • if a size number M of the weight tensor is an integer power of said number N', said size number M is a size number of the envelope tensor,
      • if a size number M of the weight tensor is not an integer power of said number N', said number N' raised to a power equal to the ceiling value of log base N' of said size number M is a size number of the envelope tensor,

   - reshaping (E30) said envelope tensor by tensorization based on said number N' such that the shape vector of the reshaped envelope tensor comprises d_I occurences of N',
   - determining (E40) a Tensor-Ring representation of the reshaped envelope tensor in the form of a sequence of d_I elements comprising tensors, said tensors of the sequence being referred to as "cores" and belonging to said vector space,
   - parameterizing (E50) each core into a combination of the basis tensors, the method further comprising a second phase comprising the steps of:
   - initializing (F20) the basis tensors and the combinations from which said compressed network is parameterized,
   - training (F30) said compressed network, the basis tensors and coefficients defining said combinations being considered as trainable parameters during said training,
   - classifying digital images using the trained compressed network.

2. The method according to claim 1, wherein, for each weight tensor, the sequence associated with the reshaped envelope tensor also comprises, before each core, a diagonal matrix intended to be multiplied with said core following it in said sequence, the size of a diagonal matrix being defined as a function of the rank hyperparameter R', said diagonal matrix being also initialized during the initialization step and being also considered as a learnable parameter during the training of the compressed neural network.

3. The method according to any one of claims 1 to 2, wherein the basis tensors satisfy at least one constraint parameterized by the number of independent parameters defining each of said basis tensors.

4. A computer program including instructions for executing the image classification method according to any one of claims 1 to 3 when said program is executed by a computer.

5. A recording medium readable by a computer and having recorded thereon a computer program according to claim 4.

6. A data processing system for image classification of digital images, the data processing system comprising means configured to perform an image classification method according to any one of claims 1 to 3.

**Patentansprüche**

1. Computerimplementiertes Verfahren zur Bildklassifizierung digitaler Bilder, das Verfahren umfassend eine erste Phase eines Komprimierens eines neuronalen Faltungsnetzes, umfassend eine Vielzahl von Schichten, jede Schicht umfassend einen Gewichtstensor, dessen Form ein Vektor ist, dessen Komponenten als "Größenzahlen" bezeichnet werden, wobei die erste Phase unter Verwendung eines Ranghyperparameters R' und eines Größenhyperparameters B, repräsentativ für eine Anzahl von Basistensoren ist, durchgeführt wird, wobei jeder Basistensor ein Array ist, das zu einem Vektorraum gehört, dessen Dimension gleich R' x N' x R' ist, wobei N' eine Zahl gleich wie oder größer als 2 ist, die erste Phase umfassend für jeden Gewichtstensor einen Satz folgender Schrittet:

- Einbetten (E20) des Gewichtstensors in einen Hüllentensor, wobei die Größe des Hüllentensors gleich wie ein Produkt von Größenzahlen ist, sodass:

   • wenn eine Größenzahl M des Gewichtstensors eine ganzzahlige Potenz der Zahl N' ist, die Größenzahl M eine Größenzahl des Hüllentensors ist,
   • wenn eine Größenzahl M des Gewichtstensors keine ganzzahlige Potenz der Zahl N' ist, die Zahl N', die auf eine Potenz erhöht wird, die gleich dem Höchstwert der logarithmischen Basis N' der Größenzahl M ist, eine Größenzahl des Hüllentensors ist,

- Umformen (E30) des Hüllentensors durch Tensorisierung basierend auf der Zahl N', sodass der Formvektor des umgeformten Hüllentensors d_I Vorkommen von N' umfasst,
- Bestimmen (E40) einer Tensor-Ringdarstellung des umgeformten Hüllentensors in Form einer Folge von d_I Elementen, umfassend Tensoren, wobei die Tensoren der Folge als "Kerne" bezeichnet werden und zu dem Vektorraum gehören,
- Parametrisieren (E50) jedes Kerns in eine Kombination der Basistensoren, das Verfahren ferner umfassend eine zweite Phase, umfassend die folgenden Schritte:

   - Initialisieren (F20) der Basistensoren und der Kombinationen, aus denen das komprimierte Netz parametrisiert wird,
   - Trainieren (F30) des komprimierten Netzes, wobei die Basistensoren und die Koeffizienten, die diese Kombinationen definieren, als trainierbare Parameter während des Trainings betrachtet werden,
   - Klassifizieren digitaler Bilder unter Verwendung des trainierten komprimierten Netzes.

2. Verfahren nach Anspruch 1, wobei die Sequenz, die mit dem umgeformten Hüllentensor assoziiert ist, für jeden Gewichtstensor vor jedem Kern auch eine Diagonalmatrix umfasst, die dazu bestimmt ist, mit dem in der Sequenz folgenden Kern multipliziert zu werden, die Größe einer Diagonalmatrix abhängig von dem Ranghyperparameter R' definiert ist, wobei die Diagonalmatrix auch während des Initialisierungsschritts initialisiert wird und während des Trainings des komprimierten neuronalen Netzes auch als ein lernbarer Parameter betrachtet wird.

3. Verfahren nach einem der Ansprüche 1 bis 2, wobei die Basistensoren mindestens eine Bedingung erfüllen, die durch die Anzahl unabhängiger Parameter, die jeden der Basistensoren definieren, parametrisiert ist.

4. Computerprogramm, das Anweisungen zum Ausführen des Bildklassifizierungsverfahrens nach einem der Ansprüche 1 bis 3 beinhaltet, wenn das Programm von einem Computer ausgeführt wird.

5. Aufzeichnungsmedium, das von einem Computer lesbar ist und auf dem ein Computerprogramm nach Anspruch 4 aufgezeichnet ist.

6. Datenverarbeitungssystem für Bildklassifizierung digitaler Bilder, das Datenverarbeitungssystem umfassend Einrichtungen, die konfiguriert sind, um ein Bildklassifizierungsverfahren nach einem der Ansprüche 1 bis 3 durchzuführen.

**Revendications**

1. Procédé mis en œuvre par ordinateur pour le classement d'image d'images numériques, ledit procédé comprenant une première phase de compression d'un réseau neuronal circonvolutionnaire comprenant une pluralité de couches, chaque couche comprenant un tenseur de poids dont la forme est un vecteur avec des composants désignés « nombres de taille », ladite première phase étant réalisée en utilisant un hyperparamètre de rang R' et un hyperparamètre de taille B représentatifs d'un nombre de tenseurs de base, chaque tenseur de base étant une rangée appartenant à un espace de vecteur dont la dimension est égale à R' x N' x R', où N' est un nombre égal ou supérieur à 2, ladite première phase comprenant, pour chaque tenseur de poids, un ensemble d'étapes de :

   - incorporation (E20) du tenseur de poids dans un tenseur d'enveloppe, la taille du tenseur d'enveloppe étant égale à un produit des nombres de taille de telle sorte que :

      • si un nombre de taille M du tenseur de poids est une puissance entière dudit nombre N', ledit nombre de taille M est un nombre de taille du tenseur d'enveloppe,
      • si un nombre de taille M du tenseur de poids n'est pas une puissance entière dudit nombre N', ledit nombre N' élevé à une puissance égale à la valeur de plafond du logarithme de base N' dudit nombre de taille M est un nombre de taille du tenseur d'enveloppe,

   - reconstruction (E30) dudit tenseur d'enveloppe par tensorisation basée sur ledit nombre N' de telle sorte que le vecteur de forme du tenseur d'enveloppe reconstruit comprend d_l occurrences de N',
   - détermination (E40) d'une représentation tenseur-anneau du tenseur d'enveloppe reconstruit sous la forme d'une séquence de d_l éléments comprenant des tenseurs, lesdits tenseurs de la séquence étant appelés « noyaux » et appartenant audit espace de vecteur,
   - paramétrage (E50) de chaque noyau dans une combinaison des tenseurs de base, le procédé comprenant en outre une deuxième phase comprenant les étapes de :

      - initialisation (F20) des tenseurs de base et des combinaisons à partir desquels ledit réseau comprimé est paramétré,
      - entraînement (F30) dudit réseau comprimé, les tenseurs et coefficients de base définissant lesdites combinaisons qui sont considérées comme des paramètres pouvant être entraînés pendant ledit entraînement,
      - classement des images numériques en utilisant le réseau comprimé entraîné.

2. Procédé selon la revendication 1, selon lequel, pour chaque tenseur de poids, la séquence associée au tenseur d'enveloppe reconstruit comprend également, avant chaque noyau, une matrice diagonale prévue pour être multiplié avec ledit noyau qui la suit dans ladite séquence, la taille d'une matrice diagonale étant définie comme une fonction de l'hyperparamètre de rang R', ladite matrice diagonale étant également initialisée pendant l'étape d'initialisation et étant également considérée comme un paramètre d'apprentissage pendant l'entraînement du réseau neuronal comprimé.

3. Procédé selon l'une quelconque des revendications 1 à 2, selon lequel les tenseurs de base satisfont au moins une contrainte paramétrée par le nombre de paramètres indépendants définissant chacun desdits tenseurs de base.

4. Programme informatique comprenant des instructions pour exécuter le procédé de classement d'image selon l'une quelconque des revendications 1 à 3 quand ledit programme est exécuté par un ordinateur.

5. Support d'enregistrement lisible par un ordinateur et ayant enregistré dessus un programme informatique selon la revendication 4.

6. Système de traitement de données pour le classement d'image d'images numériques, le système de traitement de données comprenant des moyens configurés pour réaliser un procédé de classement d'image selon l'une quelconque des revendications 1 à 3.

**10**

| |
|---|
| MOD_SEL |
| MOD_INI |
| MOD_EMB |
| MOD_DET |
| MOD_PAR |
| MOD_TRAIN |
| MOD_RSHA |

## FIG.1

**10**

| 5 | 1 | 3 |
| | | PROG |
| | 4 | 2 |

## FIG.2

```
┌─────────────────────────────────────┐
│                                     │  E10
│   Selection of hyperparameters R, N, B │
│                                     │
└─────────────────────────────────────┘
                    │
                    ▼
┌─────────────────────────────────────┐
│                                     │  E20
│    Embedding a weight tensor into an │
│            envelope tensor           │
│                                     │
└─────────────────────────────────────┘
                    │
                    ▼
┌─────────────────────────────────────┐
│                                     │  E30
│     Reshaping the envelope tensor by │
│             tensorization            │
│                                     │
└─────────────────────────────────────┘
                    │
                    ▼
┌─────────────────────────────────────┐
│   Determination of a representation of │  E40
│    the reshaped envelope tensor in the │
│      form of a sequence of elements   │
│            comprising cores           │
└─────────────────────────────────────┘
                    │
                    ▼
┌─────────────────────────────────────┐
│                                     │  E50
│    Parameterization of each core into a │
│     combination of the basis tensors  │
│                                     │
└─────────────────────────────────────┘
```

## FIG.3

Compression of a first convolutional neural network — F10

Initialization of the basis tensors — F20

Training of the first compressed network — F30

Compression of a second convolutional neural network using the parameters learned during the training of the first compressed network — F40

Training of the second compressed network — F50

FIG.4

FIG.5

**EP 3 923 199 B1**

### REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **HE K.** ; **ZHANG X.** ; **REN S.** ; **SUN J.** Deep residual learning for image recognition. *Proceedings of the IEEE conference on computer vision and pattern recognition*, 2016, 770-778
- **SIMONYAN K.** ; **ZISSERMAN A.** Very deep convolutional networks for large-scale image recognition. *International Conference on Learning Representations*, 2015
- **ZHAO Q.** ; **ZHOU G.** ; **XIE S.** ; **ZHANG L.** ; **CICHOCKI A.** Tensor ring decomposition. *arXiv: 1606.05535*, 2016
- **WANG W.** ; **SUN Y.** ; **ERIKSSON B.** ; **AGGARWAL V.** Wide compression: Tensor ring nets. *Proceedings of the IEEE conference on computer vision and pattern recognition*, 2018, 9329-9338
- **LI Y.** ; **GU S.** ; **GOOL L. V.** ; **TIMOFTE R.** Learning Filter Basis for Convolutional Neural Network Compression. *Proceedings of the IEEE International Conference on Computer Vision*, 2019, 5623-5632
- **NOVIKOV A.** ; **PODOPRIKHIN D.** ; **OSOKIN A.** ; **VETROV D.** Tensorizing Neural Networks. *Advances in Neural Information Processing Systems*, 2015, 442-450
- **HE K.** ; **ZHANG X.** ; **REN S.** ; **SUN J.** Delving deep into rectifiers: Surpassing human-level performance on imagenet classification. *IEEE international conference on computer vision*, 2015, 1026-1034
- **KINGMA D.** ; **BA J.** Adam: A method for stochastic optimization. *Arxiv: 1412.6980*, 2015
- **LECUN Y.** ; **BOTTOU L.** ; **BENGIO Y.** ; **HAFFNER P.** Gradient-based learning applied to document recognition. *Proceedings of the IEEE*, 1998, vol. 86 (11), 2278-2324